Europäisches Patentamt

(19) European Patent Office

Office européen des brevets

(11) Publication number: **0 332 962 B1**

# EUROPEAN PATENT SPECIFICATION

(45) Date of publication of patent specification:
29.05.91 Bulletin 91/22

(51) Int. Cl.⁵: **F02D 41/14, F02D 41/34,**
**F02D 41/10**

(21) Application number: **89103853.1**

(22) Date of filing: **06.03.89**

(54) Engine control method and apparatus.

(30) Priority: **12.03.88 JP 57355/88**

(43) Date of publication of application:
**20.09.89 Bulletin 89/38**

(45) Publication of the grant of the patent:
**29.05.91 Bulletin 91/22**

(84) Designated Contracting States:
**DE GB**

(56) References cited:
**GB-A- 2 167 882**
**PATENT ABSTRACTS OF JAPAN, vol. 7, no.**
**207 (M-242)[1352], 13th September 1983; &**
**JP-A-58 104 335 (TOYOTA JIDOSHA KOGYO**
**K.K.) 21-06-1983**
**PATENT ABSTRACTS OF JAPAN, vol. 9, no. 60**
**(M-364)[1783], 16th March 1985, page 40 M**
**364; & JP-A-59 194 056 (MAZDA K.K.) 02-**
**11-1984**
**PATENT ABSTRACTS OF JAPAN, vol. 8, no.**
**132 (M-303)[1569], 20th June 1984, page 159 M**
**303; & JP-A-59 34 447 (TOYO KOGYO K.K.)**
**24-02-1984**
**FISITA XXI, Belgrad 6/1986, paper 865016**

(73) Proprietor: **HITACHI, LTD.**
**6, Kanda Surugadai 4-chome**
**Chiyoda-ku, Tokyo 101 (JP)**
Proprietor: **HITACHI AUTOMOTIVE**
**ENGINEERING CO., LTD.**
**2477-3 Kashimayazu Takaba**
**Katsuta-shi Ibaraki 312 (JP)**

(72) Inventor: **Sasaki, Masahiro**
**Yukou-ryo A214 1477-2 Tabiko**
**Katsuta-shi Ibaraki 312 (JP)**
Inventor: **Abe, Osamu**
**3143-6 Higashi Ishikawa**
**Katsuta-shi Ibaraki 312 (JP)**
Inventor: **Ishikawa, Hideaki**
**Bouda-Apt. 344 2593 Takaba**
**Katsuta-shi Ibaraki 312 (JP)**

(74) Representative: **Patentanwälte Beetz sen. -**
**Beetz jun. Timpe - Siegfried - Schmitt-Fumian-**
**Mayr**
**Steinsdorfstrasse 10**
**W-8000 München 22 (DE)**

## Description

The present invention relates to a method and an apparatus for controlling an internal combustion engine in according to the precharacterizing parts of the claims 1 and 4, respectively. Such an engine control method an apparatus is known from JP-A-59-194056.

In general, automobiles are frequently independent subjected to acceleration and deceleration control during their operation. For example, in an apparatus known from JP-A-58-144632, fuel injection control process of an internal combustion engine for automobiles has a correction function of a fuel increment for acceleration, i.e. an acceleration correction, incorporated therein, so that the automobile will have a desired acceleration performance.

A basic fuel injection amount is obtained based on suction pipe pressure and r.p.m. of the engine. At a transition, the fuel injection amount is determined by correcting the basic fuel injection amount according to the engine conditions. A value obtained by integrating an estimated value preset according to variation $\Delta PM$ of the suction pipe pressure at each prescribed time is used as a correction coefficient, and correction of fuel increment for acceleration is carried out using the correction coefficient according to an increase rate of the suction pipe pressure.

The above-mentioned conventional method, however, does not pay attention on whether or not the fuel increment amount added according to the prescribed condition such as the suction pipe pressure variation is proper for each engine state. Therefore, there is no guarantee that an optimum acceleration performance is maintained at all times.

The method and the apparatus known from JP-A-59-194056 disclose to correct a fuel increase value in case of acceleration by means of a correction coefficient which is determined on the basis of a detected lean time. One lean time period is detected in a steady operational state of the engine from a point of time where the air-fluel ratio changes to a lean state until a point of time where the air-fuel ratio changes to a rich state. This lean time period is stored in a map.

When in an acceleration state the air-fuel ratio changes from a lean to a rich state, the lean time in the acceleration is compared with the lean time in the steady state operation obtained from the map.

Thus, in the prior art according to the JP-A-59-194056, the detected lean time is compared with lean time in the steady state operation of the engine, and the fuel correction for acceleration is effected based on the lean time in the steady state operation. Therefore, when for example, the engine conditions change after a certain time period has lapsed and the engine has a carbon layer adhered to the inner wall of the suction parts, in the prior art the duration of lean time changes equally in case of acceleration and in case of steady state operation, whereby the fuel adhesion on the cylinder wall influences the acceleration operation and the steady state operation.

Therefore the acceleration cannot be improved by the control based on the steady state lean time.

It is known from paper 865016 (FISITA XXI, Belgrad, 2-6 June 1986) that the response time of the suction system of automobiles in non-linearly related to load and rpm. Small movements of the throttle valve may lead to a rich excursion, larger movements to a lean excursion during acceleration.

An object of the present invention is to provide a method and an apparatus for controlling an internal combustion engine being capable of maintaining an excellent acceleration performance at all times by applying a prescribed correction for acceleration at all times without being influenced of a deterioration of engine characteristics with the passage of time.

The above object is solved by an engine control method in accordance with the features of claim 1 and by an engine control apparatus in accordance with the features of claim 4.

According to the present invention, a responsiveness to acceleration can be sufficiently improved because fuel increment for acceleration is corrected to be optimum at all times for each of various kinds of acceleration modes such as abrupt acceleration operation, gentle acceleration operation or the like.

Brief Description of the Drawings

Fig. 1 is a block diagram of an embodiment of an engine control apparatus according to the present invention ;

Fig. 2 is diagrams explanatory of an air fuel-ratio feedback coefficient $\alpha$ ;

Fig. 3 is a diagram explanatory of a relationship between a correction for acceleration and an air-fuel ratio and showing changes in a throttle sensor output and an $O_2$ sensor output ;

Fig. 4 is a diagram explanatory of a table for reference periods of time ;

Fig. 5 is a flow chart explanatory of operation of an embodiment of the present invention ;

Fig. 6 is a diagram explanatory of a characteristic function between a coefficient Ko and a variable Ta ; and

Fig. 7 is a diagram explanatory of a map for acceleration correction coefficients.

Description of the Invention

An engine control apparatus according to the present invention will be described below in detail with reference to an embodiment shown in the drawings.

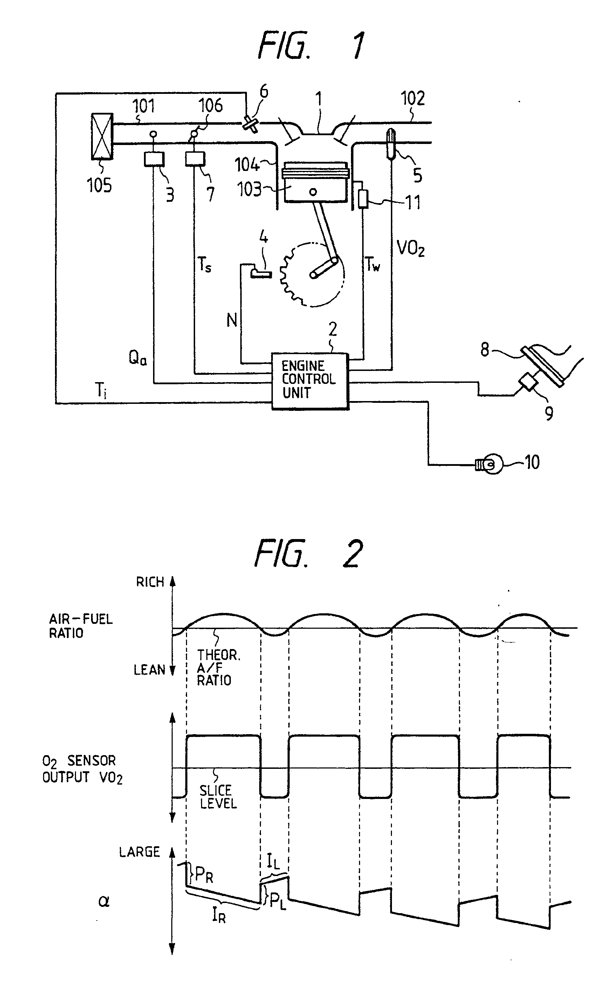

Fig. 1 shows an example of the engine control apparatus to which an embodiment of the present invention is applied.

An engine 1 is provided with a suction pipe 101 and an exhaust pipe 102. The engine 1 causes a piston 103 to reciprocate in a cylinder 104 by combustion of fuel supplied into the cylinder. The reciprocation of the piston 103 causes a crank to rotate and the revolution speed of the crank is detected by a crank angle sensor 4.

The suction pipe 101 is provided with an air flow sensor 3 at a downstream side of an air cleaner 105, a throttle valve 106 with a throttle sensor 7 to detect opening and closing degrees, and a fuel injector 6 for supplying fuel into the engine. The exhaust pipe 102 is provided with an $O_2$ sensor 5 to detect $O_2$ in the exhaust gas.

The engine 1 further is provided with an engine temperature sensor 11 for outputting a signal corresponding to the engine temperature Tw and an accelerator pedal 8. The accelerator pedal 8 is connected to the throttle valve 106 to operate it and to an idle switch 9 to operate the same, too.

The engine is controlled by a control unit 2. The control unit is electrically connected to the above-mentioned various sensors, the air flow sensor 3, the crank angle sensor 4, the throttle sensor 7, the $O_2$ sensor 5, the idle switch 9, etc., receives various electric signals, r.p.m. of the engine (N), an amount of $O_2$ ($VO_2$), etc, and a signal from the idle switch 9, calculates and generates a signal (Ti) to control the fuel injector. A numeral 10 is an operation indicating lamp.

The air flow sensor 3 measures a flow rate Qa of an air sucked into the engine 1 and inputs it to the control unit 2.

The crank angle sensor 4 generates pulse signals in synchronism with the rotation of the engine 1 and the control unit 2 calculates an r.p.m. N of the engine 1 based on the pulse signals.

Then, the control unit 2 calculates a basic pulse width Tp of pulse signals to be supplied to the injector 6 based on signals from these sensors and supplies the pulse signals to the injector 6 to provide a prescribed air-fuel ratio.

The control unit 2 calculates the basic pulse width Tp based on the following equation ;

$$Tp = K \cdot Qa/N \quad (1)$$

wherein K : constant.

On the other hand, the $O_2$ sensor mounted on the exhaust pipe of the engine 1 generates signals relating to a concentration of $O_2$ (oxygen) in an exhaust gas from the engine 1. The control unit 2 effects feedback control of an amount of fuel to be supplied based on signals from the $O_2$ sensor 5 to attain a desired air-fuel ratio and further the control unit 2 calculates, in order to make other necessary corrections, a fuel injection pulse width Ti to be actually supplied to the injector 6 based on the basic pulse width Tp from the following equation ;

$$Ti = Tp \cdot \alpha \cdot (1+Kac+K1) \quad (2)$$

wherein

$\alpha$ : feedback correction coefficient
Kac : acceleration correction coefficient
K1 : other correction coefficient.

The feedback control is effected to inject fuel of a precise amount so that an air-fuel ratio will be within a narrow range (called window) the center of which is a desired air-fuel ratio such as a theoretical air fuel ratio. The feedback correction coefficient $\alpha$ in the equation (2) is prepared by the control unit 2 based on an output voltage $VO_2$ from the $O_2$ sensor 5, as shown in Fig. 2. The coefficient $\alpha$ is designed in such that when an air-fuel ratio changes from a leaner state than a theoretical air-fuel ratio to a richer state than it, the output signal of the $O_2$ sensor rises stepwise and the coefficient $\alpha$ is lowered by a value corresponding to a proportional portion Pr and then gradually decreased according to a an integration portion Ir, while when it changes from a rich state to a lean state, the output voltage of the $O_2$ sensor drops stepwise and the coefficient $\alpha$ is added by a proportional portion $P_1$ and then gradually increased according to an integration portion $I_1$. The control unit 2 prepares the feedback correction coefficient $\alpha$. Therefore, the air-fuel ratio is always subjected to a negative feedback control.

The acceleration correction coefficient Kac is used to effect fuel increment correction when it is sensed by various kinds of sensors such as a throttle sensor 7 that the accelerator pedal 8 is depressed to accelerate the engine 1. Further, the other correction coefficient K1 is provided for effecting various kinds of corrections necessary for controlling the engine.

Incidentally, as described above, although the prior art also gives the acceleration correction coefficient Kac, any attention on whether or not an amount of fuel injected according to the acceleration correction coefficient Kac is proper is not paid, so that it is not sure to always provide a proper correction suited to an accelerating state and to provide a satisfactory responsiveness to acceleration.

As shown in the following equation (3),

$$Ti = Tp \cdot \alpha \cdot (1+Kacn+K1) \quad (3)$$

wherein

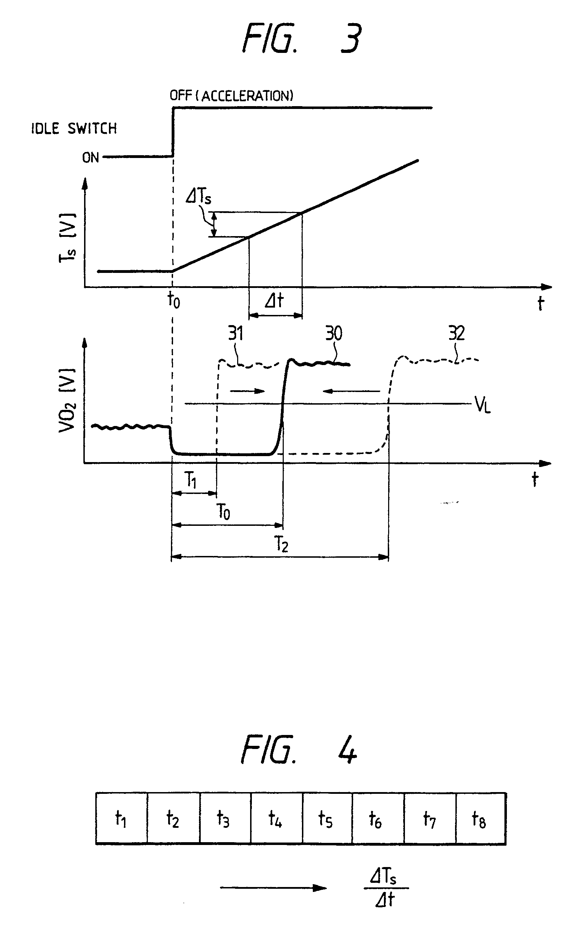

Kacn = Kac+K0
K0 : correction coefficient,
the present embodiment employs the acceleration correction coefficient Kacn so that a sufficient responsiveness to acceleration can be obtained, which will be described below in detail, referring to Fig. 3 in addition to Fig. 1.

Supposing that the accelerator pedal 8 is depressed at a time $t_0$ to accelerate the engine 1, the behaviour of an output $VO_2$ from the $O_2$ sensor 5 at that time will be studied. As shown in Fig. 3 the output $VO_2$ decrease at the time $t_0$, which represents that the air-fuel ratio become in a lean state at the time $t_0$ and then it increases stepwise after a prescribed period of time T, which means that the air-fuel ratio changes to a rich state. This is because a suction system of an engine 1 responds to only air sooner than it responds to fuel so that when the throttle valve 106 is opened, only air is increased first and then fuel increase follows. As a result, a period of time T until the air-fuel ratio changes to a rich state after it became lean state depends on an fuel increment amount. When the amount of fuel is greater than necessary, a characteristic 31 shown in the drawing is obtained wherein the air-fuel ratio represented by the output $VO_2$ becomes rich quickly and the period of time required at that time is $T_1$ as shown in the drawing, while when it is less than necessary, a characteristic 32 shown in the drawing is obtained wherein the time of period has a large delay as shown by $T_2$. In conclusion, when a suitable amount of fuel is increased, a characteristic 30 is obtained wherein the period of time is $T_0$.

In this embodiment a period of time T, which elapses until an output $VO_2$ of the $O_2$ sensor exceeds a prescribed slice level $V_1$ after the engine 1 is controlled to accelerate and the air-fuel ratio becomes lean, is measured, and the acceleration correction coefficient Kacn is corrected so that the period of time T will converge on a time period $T_0$ which is determined in advance through experiments so as to impart an optimum acceleration to the engine 1, whereby an optimum acceleration correction is ensured at all times.

In the embodiment, an acceleration at that time is sensed based on a rate of change $\Delta Ts/\Delta t$ of an output Ts from the throttle sensor 7, as shown in Fig. 3, and further an amount of fuel increment correction for acceleration is controlled based on the rate of change $\Delta Ts/\Delta t$, i.e., a degree of speed of acceleration effected by the accelerator pedal 8, thereby providing better acceleration characteristics. Therefore, periods of time which are deemed optimum are selected in advance as reference periods of time $t_1$-$t_8$ in accordance with the rates of change $\Delta Ts/\Delta t$ at respective times and they are tabulated as shown in Fig. 4. The table is searched based on the rate of change $\Delta Ts/\Delta t$ to get a reference value corresponding to the rate of change.

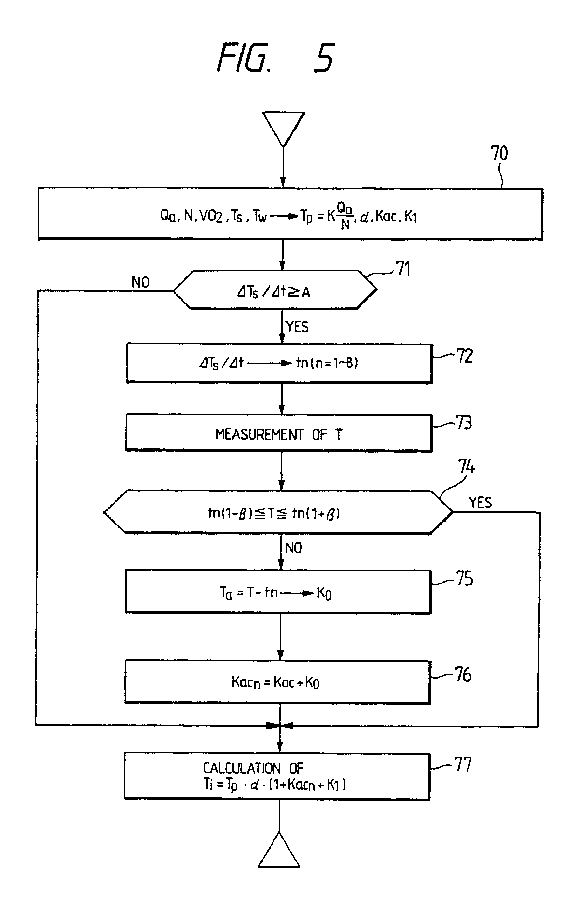

Next, the aforesaid operation effected by the control unit 2 of the embodiment will be described with reference to a flow chart in Fig. 5.

First, the control unit 2 received data concerning an amount of suction air flow rate Qa, an r.p.m. N of the engine, an output voltage $VO_2$ of the $O_2$ sensor, an output Ts of the throttle sensor and an engine temperature Tw and calculates a basic pulse width Tp, the feedback control coefficient $\alpha$, the acceleration cor-

rection coefficient Kac and the other correction coefficient K1 based on those signals (step 70). This step 70 is conventional.

Next, the control unit 2 compares a rate of change $\Delta Ts/\Delta t$ with a prescribed reference value A set in advance and when a result is YES, that is, when the rate of change is equal to the reference value A or above, it is determined to be acceleration and when it is NO, that is, the change rate is less than the reference value A, it is determined not to be acceleration (step 71). At this time, the reference value A is a reference period of time corresponding to a minimum rate of change in throttle sensor output at which acceleration correction is necessary, that is, the reference value A is set as follows :

$A = t_1$.

Next, the control unit 2 determines a reference period of time $t_n$ (n = 1 – 8) corresponding to the rate of change $\Delta Ts/\Delta t$ by searching the table in Fig. 4 based on the rate of change (step 72). Each reference period of time tn (n1 – 8) is given corresponding to each of eight acceleration ranks of $\Delta Ts/\Delta t$ into which a rate of change $\Delta Ts/\Delta t$ from a minimum rate of change at which acceleration correction is necessary to a maximum rate of change at which an acceleration speed is maximum is divided.

Next, the control unit 2 measures the period of time T as described in Fig. 3 (step 73).

Next, the control unit 2 determines whether the period of time T is within the following prescribed range which is determined by the period of time $t_n$ (any one of $t_1$ to $t_8$) determined according to the rate of change $\Delta Ts/\Delta t$, and the prescribed value $\beta$ (step 74):

$$t_n (1 - \beta) \leqq T \leqq t_n (1 + \beta)$$

wherein is set in advance to be a value so as to satisfy the following :

$$t_{n+1} (1 - \beta) > t_n (H\beta)$$
$$0 < \beta < 1, t_{n+1} > t_n.$$

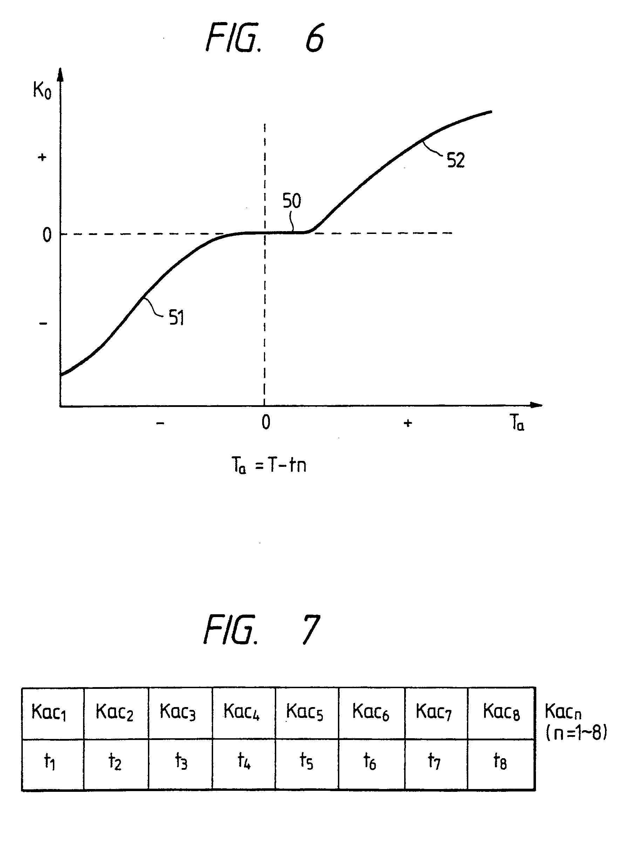

When a result of the step 74 is NO, the control unit 2 determines a variable Ta by the following calculation and then calculates a coefficient Ko based on the variable Ta by use of a characteristic function shown in Fig. 6 which is obtained in advance through experiment (step 75).

$$Ta = T - t_n \rightarrow Ko$$

After that, the control unit 2 calculates a new correction coefficient Kacn based on the coefficient Ko (step 76).

Finally, the control unit 2 calculates a fuel injection pulse width Ti based on the equation (3) to terminate the steps (step 77).

When a result of the step 71 is NO, the acceleration correction coefficient Kacn in the equation (3) is made zero and the fuel injection pulse is calculated according to the equation (3) with Kacn of 0 because the engine is not controlled to accelerate and there is need to effect fuel increment correction for acceleration. When a result of the step 74 is YES, the control unit 2 executes the step 77 without renewal of Kacn to terminate the processing.

As shown in Fig. 7, the acceleration correction coefficients Kacn necessary for calculating the fuel injection pulse width Ti in the step 77 are arranged in a map in advance corresponding to the reference period of time $t_n$ and stored in the control unit 2, and the acceleration correction coefficients Kacn are searched for use based on the reference period of time $t_n$. On the other hand, the map in Fig. 7 is such that every time new acceleration correction coefficients Kacn are calculated through the execution of the steps 75, 76, their corresponding coefficients are rewritten for updating, that is, they progress in learning.

Therefore, according to the embodiment, an optimum correction for acceleration is given according to a magnitude of the rate of change $\Delta Ts/\Delta t$ of the output Ts of the throttle sensor 7, i.e. a degree of speed at which acceleration is actually effected and further it is corrected through learning, so that a stable acceleration performance can be maintained for ever.

As shown in the step 71 in Fig. 5, although the embodiment senses whether acceleration is effected based on a magnitude of the rate of change $\Delta Ts/\Delta t$ of the output Ts, the acceleration operation may be sensed by turning on and off the idle switch 9 in place of the method as shown in Fig. 3.

## Claims

1. A method for controlling an internal combustion engine in which a basic fuel injection pulse width is calculated based on data from various sensors provided for the engine, said basic fuel injection pulse width is corrected by various factors determined based on engine conditions, and a fuel injector provided for the engine is controlled based on the corrected fuel injection pulse width, comprising following steps :
 – detecting acceleration and the degree ($\Delta Ts/\Delta t$) of acceleration of the engine,
 – detecting a period of time (T) from a point of time (to) where the engine is controlled to accelerate whereby an air-fuel ratio changes into a lean state until a point of time where the air-fuel ratio changes into a rich state, characterized by following steps :
 – associating a plurality of reference periods of time (tn) to each respective degree of acceleration ($\Delta Ts/\Delta t$), said reference periods of time ($t_n$) being set in advance so that for each associated acceleration degree ($\Delta Ts/\Delta t$) an optimum acceleration is carried out, and
 – correcting a fuel increment for acceleration so that the detected period of time (T) will converge on a reference period of time (To) selected from the plurality of reference periods of time according to the acceleration speed.

2. The method according to claim 1, characterized by a step of comparing the detected period of time with the selected reference period of time according to the acceleration degree ($\Delta Ts/\Delta t$) and a step of correcting the acceleration correction coefficient based on a difference between the reference period of time and the detected period of time.

3. The method according to claim 1, characterized in that the step of correcting the fuel increment for acceleration includes the steps of :
 selecting one of a plurality of different acceleration correction coefficients (Kacn) determined in advance according to a detected acceleration degree ($\Delta Ts/\Delta t$),
 comparing the detected period of time with the reference period of time ;
 correcting the correction coefficient (Kacn) based on the difference ; and
 correcting fuel injection pulse width on the basis of corrected acceleration correction coefficient.

4. An engine control apparatus provided with
 – means calculating a basic fuel injection pulse width based on data from various sensors,
 – means correcting the basic fuel injection pulse width by a plurality of coefficients including an acceleration correction coefficient,
 – means generating a control signal for controlling a fuel injector to inject an optimum fuel amount relative to a flow rate of air sucked into the engine based on the corrected fuel injection pulse width, and
 – means carrying out a feedback control of an air-fuel ratio to reach a desired value thereof,
 – means for detecting an acceleration and an acceleration degree ($\Delta Ts/\Delta t$) of the engine, and
 – means (2, 3, 5, 7) detecting a period of time (T) until the air-fuel ratio turns into a rich state from a point of time where the engine is controlled to accelerate whereby the air-fuel ratio becomes lean,
 characterized by
 – means for selecting a reference period of time optimum to the detected acceleration degree from a plurality of reference periods of time each of which is determined in advance so that an optimum acceleration is carried out according to an associated acceleration degree, and
 – means (2) comparing the detected period of time with a prescribed reference period of time selected according to the detected acceleration degree and correcting the acceleration correction coefficient so that the detected period of time will converge on the selected reference period of time.

5. The engine control apparatus according to claim 4, wherein said period of time (T) is detected by detecting a change of an output voltage of an $O_2$ sensor (5) mounted in an exhaust pipe of the engine.

## Ansprüche

1. Verfahren zum Steuern einer Verbrennungskraftmaschine, in dem eine Grundkraftstoffeinspritzimpulsbreite basierend auf Daten von für den Motor vorgesehenen Sensoren berechnet wird, die Grundkraftstoffeinspritzimpulsbreite durch verschiedene Faktoren korrigiert wird, die basierend auf Motorzuständen bestimmt werden, und ein Kraftstoffeinspritzventil für den Motor vorgesehen ist, das basierend auf der korrigierten Kraftstoffeinspritzimpulsbreite gesteuert wird, und das die folgenden Schritte umfaßt :
- Erfassen der Beschleunigung und des Beschleunigungsgrads ($\Delta T_s/\Delta t$) des Motors,
- Erfassen einer Zeitperiode (T) ausgehend von einem Zeitpunkt ($t_0$), an dem der Motor derart gesteuert ist, daß er beschleunigt, wodurch sich ein Luft/Kraftstoff-Verhältnis zu einem mageren Zustand ändert, bis zu einem Zeitpunkt, an dem sich das Luft/Kraftstoff-Verhältnis in einen reichen Zustand ändert, **gekennzeichnet** durch die folgenden Schritte :
- Zuordnen von mehreren Referenzzeitperioden ($t_n$) zu jedem Beschleunigungsgrad ($\Delta T_s/\Delta t$), wobei die Referenzzeitperioden ($t_n$) im voraus gesetzt werden, so daß eine optimale Beschleunigung für jeden zugeordneten Beschleunigungsgrad ($\Delta T_s/\Delta t$) ausgeführt wird, und
- Korrigieren eines Kraftstoffinkrements zur Beschleunigung, so daß sich die erfaßte Zeitperiode (T) einer Referenzzeitperiode ($T_0$) angleicht, die aus mehreren Referenzzeitperioden gemäß der Beschleunigungsgeschwindigkeit ausgewählt ist.

2. Verfahren nach Anspruch 1, gekennzeichnet durch einen Schritt des Vergleichens der erfaßten Zeitperiode mit der gemäß dem Beschleunigungsgrad ($\Delta T_s/\Delta t$) gewählten Referenzzeitperiode und einen Schritt des Korrigierens des Beschleunigungskorrekturkoeffizienten, basierend auf einer Differenz zwischen der Referenzzeitperiode und der erfaßten Zeitperiode.

3. Verfahren nach Anspruch 1, dadurch gekennzeichnet, daß der Schritt des Korrigierens des Kraftstoffinkrements für die Beschleunigung die folgenden Schritte enthält :
- Auswählen eines von mehreren verschiedenen Beschleunigungskorrekturkoeffizienten ($Kac_n$), die im voraus gemäß eines erfaßten Beschleunigungsgrades ($\Delta T_s/\Delta t$) bestimmt werden,
- Vergleichen der erfaßten Zeitperiode mit der Referenzzeitperiode,
- Korrigieren des Korrekturkoeffizienten ($Kac_n$),

basierend auf der Differenz, und
- Korrigieren der Kraftstoffeinspritzimpulsbreite auf der Basis des korrigierten Beschleunigungskorrekturkoeffizienten.

4. Motorsteuervorrichtung mit
- Mitteln zum Berechnen einer Grundkraftstoffeinspritzimpulsbreite, basierend auf Daten von verschiedenen Sensoren,
- Mitteln zum Korrigieren der Grundkraftstoffeinspritzimpulsbreite durch mehrere Koeffizienten, enthaltend einen Beschleunigungskorrekturkoeffizienten,
- Mitteln zum Generieren eines Steuersignals zum Steuern eines Kraftstoffeinspritzventils zum Einspritzen einer optimalen Kraftstoffmenge in Abhängigkeit zu einem Durchsatz an in den Motor gesaugter Luft, basierend auf der korrigierten Kraftstoffeinspritzimpulsbreite,
- Mitteln zum Ausführen einer Regelung eines Luft/ Kraftstoff-Verhältnisses, so daß dasselbe einen Sollwert erreicht,
- Mitteln zum Erfassen einer Beschleunigung und eines Beschleunigungsgrads ($\Delta T_s/\Delta t$) des Motors und
- Mitteln (2, 3, 5, 7) zum Erfassen einer Zeitperiode (T) bis das Luft/Kraftstoff-Verhältnis in einen reichen Zustand wechselt, ausgehend von einem Zeitpunkt an dem der Motor derart gesteuert ist, daß er beschleunigt, wodurch das Luft/Kraftstoff-Verhältnis mager wird, **gekennzeichnet** durch
- Mittel zum Auswählen einer zu dem erfaßten Beschleunigungsgrad optimalen Referenzzeitperiode aus mehreren Referenzzeitperioden, die im voraus bestimmt werden, so daß eine optimale Beschleunigung gemäß eines zugeordneten Beschleunigungsgrads durchgeführt wird, und
- Mittel (2) zum Vergleichen der erfaßten Zeitperiode mit einer vorgeschriebenen Referenzzeitperiode, die gemäß des erfaßten Beschleunigungsgrads ausgewählt wird, und zum Korrigieren des Beschleunigungskorrekturkoeffizienten, so daß sich die erfaßte Zeitperiode an die ausgewählte Referenzzeitperiode angleicht.

5. Motorsteuervorrichtung nach Anspruch 4, in der die Zeitperiode (T) durch Erfassen einer Änderung einer Ausgangsspannung eines $O_2$-Sensors (5), der in einem Abgasrohr des Motors montiert ist, erfaßt wird.

## Revendications

1. Procédé de commande d'un moteur à combustion interne selon lequel une largeur d'impulsion d'injection de carburant fondamentale est calculée en fonction de données provenant de différents capteurs prévus pour le moteur, ladite largeur d'impulsion d'injection de carburant fondamentale est corrigée par différents facteurs déterminés en fonction de conditions de fonctionnement du moteur, et un injecteur de carburant prévu pour le moteur est commandé en fonction de la largeur d'impulsion d'injection de carburant corrigée, comportant les étapes suivantes:

– détection de l'accélération et du degré ($\Delta Ts/\Delta t$) d'accélération du moteur,

– détection d'une période de temps (T) à partir d'un instant (to) où le moteur est commandé pour accélérer si bien qu'un rapport air-carburant passe à un état pauvre jusqu'à un instant où le rapport air-carburant passe à un état riche, caractérisé par les étapes suivantes :

– association d'une pluralité de périodes de temps de référence (tn) à chaque degré respectif d'accélération ($\Delta Ts/\Delta t$), lesdites périodes de temps de référence ($t_n$) étant préalablement fixées, de sorte que pour chaque degré d'accélération associé ($\Delta Ts/\Delta t$) une accélération optimale est effectuée, et

– correction d'un incrément de carburant pour une accélération de sorte que la période de temps détectée (T) convergera vers une période de temps de référence (To) choisie parmi la pluralité de périodes de temps de référence selon la vitesse d'accélération.

2. Procédé selon la revendication 1, caractérisé par une étape de comparaison de la période de temps détectée à la période de temps de référence choisie selon le degré d'accélération ($\Delta Ts/\Delta t$) et une étape de correction du coefficient de correction d'accélération en fonction d'une différence entre la période de temps de référence et la période de temps détectée.

3. Procédé selon la revendication 1, caractérisé en ce que l'étape de correction de l'incrément de carburant pour une accélération comprend les étapes consistant à :

sélectionner l'un d'une pluralité de coefficients de correction d'accélération différents (Kacn) déterminés préalablement selon un degré d'accélération détectée ($\Delta Ts/\Delta t$),

comparer la période de temps détectée à la période de temps de référence ;

corriger le coefficient de correction (Kacn) en fonction de la différence ; et

corriger la largeur d'impulsion d'injection de carburant en fonction du coefficient de correction d'accélération corrigé.

4. Dispositif de commande d'un moteur comportant

– des moyens calculant une largeur d'impulsion d'injection de carburant fondamentale en fonction de données provenant de différents capteurs,

– des moyens corrigeant la largeur d'impulsion d'injection fondamentale par une pluralité de coefficients comprenant un coefficient de correction d'accélération,

– des moyens générant un signal de commande pour commander un injecteur de carburant afin d'injecter une quantité de carburant optimale par rapport à un débit d'air aspiré dans le moteur en fonction de la largeur d'impulsion d'injection de carburant corrigée, et

– des moyens effectuant une commande de rétroaction du rapport air-carburant pour obtenir une valeur désirée de celui-ci,

– des moyens pour détecter une accélération et un degré d'accélération ($\Delta Ts/\Delta t$) du moteur, et

– des moyens (2, 3, 5, 7) détectant une période de temps (T) jusqu'à ce que le rapport air-carburant passe à un état riche à partir d'un instant où le moteur est commandé pour accélérer si bien que le rapport air-carburant devient pauvre, caractérisé par

– des moyens pour sélectionner une période de temps de référence optimum pour le degré d'accélération détecté à partir d'une pluralité de périodes de temps de référence dont chacune est déterminée préalablement de sorte qu'une accélération optimum est effectuée selon un degré d'accélération associé, et

– des moyens (2) comparant la période de temps détectée à une période de temps de référence prescrite choisie selon le degré d'accélération détecté et corrigeant le coefficient de correction d'accélération de sorte que la période de temps détectée convergera vers la période de temps de référence choisie.

5. Dispositif de commande de moteur selon la revendication 4, dans lequel ladite période de temps (T) est détectée en détectant une variation d'une tension de sortie d'un capteur de $O_2$ (5) placé dans un tuyau d'échappement du moteur.

# FIG. 1

# FIG. 2

FIG. 3

FIG. 4

# FIG. 5

$$Q_a, N, VO_2, T_s, T_w \longrightarrow T_p = K\frac{Q_a}{N}, \alpha, Kac, K_1$$

70

$\Delta T_s / \Delta t \geq A$ — 71

NO

YES

$$\Delta T_s / \Delta t \longrightarrow tn (n=1\sim8)$$ — 72

MEASUREMENT OF T — 73

$$tn(1-\beta) \leq T \leq tn(1+\beta)$$ — 74

YES

NO

$$T_a = T - tn \longrightarrow K_0$$ — 75

$$Kac_n = Kac + K_0$$ — 76

CALCULATION OF
$$T_i = T_p \cdot \alpha \cdot (1 + Kac_n + K_1)$$ — 77

# FIG. 6

$T_a = T - tn$

# FIG. 7

| $Kac_1$ | $Kac_2$ | $Kac_3$ | $Kac_4$ | $Kac_5$ | $Kac_6$ | $Kac_7$ | $Kac_8$ | $Kac_n$ |
|---------|---------|---------|---------|---------|---------|---------|---------|---------|
| $t_1$ | $t_2$ | $t_3$ | $t_4$ | $t_5$ | $t_6$ | $t_7$ | $t_8$ | $(n=1\sim8)$ |